(19) Europäisches Patentamt
European Patent Office
Office européen des brevets

(11) EP 1 370 346 B1

(12) # EUROPEAN PATENT SPECIFICATION

(45) Date of publication and mention of the grant of the patent:
**16.05.2007 Bulletin 2007/20**

(21) Application number: **02702971.9**

(22) Date of filing: **06.03.2002**

(51) Int Cl.:
***B01D 61/36*** *(2006.01)* ***B01D 3/14*** *(2006.01)*
***B01D 63/04*** *(2006.01)*

(86) International application number:
**PCT/NL2002/000150**

(87) International publication number:
**WO 2002/070113 (12.09.2002 Gazette 2002/37)**

(54) **FRACTIONATION OF LIQUID MIXTURES USING MEMBRANE CONTACTORS**
FRAKTIONIERUNG VON FLÜSSIGKEITSGEMISCHEN MIT MEMBRANSTOFFAUSTAUSCHERN
FRACTIONNEMENT DE MELANGES DE LIQUIDES AU MOYEN DE CONTACTEURS A MEMBRANE

(84) Designated Contracting States:
**AT BE CH CY DE DK ES FI FR GB GR IE IT LI LU MC NL PT SE TR**

(30) Priority: **06.03.2001 NL 1017516**

(43) Date of publication of application:
**17.12.2003 Bulletin 2003/51**

(73) Proprietor: **Nederlandse Organisatie voor Toegepast-Natuurwetenschappelijk Onderzoek TNO**
**2628 VK Delft (NL)**

(72) Inventors:
- **JANSEN, Albert, Edward**
**NL-3992 RX Houten (NL)**
- **MEULEMAN, Erik, Everhardus, Bernardus**
**NL-7101 PG Winterswijk (NL)**
- **HAANEMAAIJER, Jan, Hendrik**
**NL-6862 AB Oosterbeek (NL)**
- **DE GRAAUW, Johannes**
**NL-2724 BK Zoetermeer (NL)**

(74) Representative: **Prins, Adrianus Willem et al**
**Vereenigde,**
**P.O.Box 87930**
**2508 DH Den Haag (NL)**

(56) References cited:
**EP-A- 0 094 543**
**EP-A- 0 457 981**
**WO-A-95/35153**
**WO-A-99/64147**
**US-A- 3 562 116**
**US-A- 3 649 467**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 370 346 B1

## Description

The present invention relates to a method for fractionating a liquid mixture containing a low-boiling (more volatile) and high-boiling (less volatile) component, in which use is made of membrane contactors. The present invention further relates to a device for carrying out such method.

Distillation is used on a large scale to (partly) separate two or more components in a liquid. Since the separation will generally not lead to completely pure components, reference is made to fractionation. Mostly, the fractionation is carried out in a plate column or a column provided with beds with structured packing. Characteristic of these processes is that an upwardly flowing vapor and a downwardly flowing liquid are brought directly into contact with each other in contact zones.

The "classic" distillation process has a number of disadvantages, *inter alia* that it requires relatively much energy and relatively large columns are necessary. Recently, attempts have been made to improve the existing distillation process, for instance by the use of selective membranes. Examples thereof are described in US 5,905,182, US 5,914,435 and US 5,962,763. The advantage of pervaporation (liquid as feed) or vapor permeation (vapor as feed) is that a large contact surface is present and by the use of selective membranes the efficiency can be increased and hence a compact column can be built. To date, the separative power - combination of permeation rate and selectivity - by a membrane has been found not to be sufficient yet to compete with distillation.

Pervaporation or vapor permeation can be used in support of distillation. In all these cases, a top or bottom stream from the column is passed through a membrane unit in which the membranes are selective in respect of at least one of the components in the mixture. The components pass the membrane and are collected as product. The retentate and a portion of the product are recycled to the distillation column. A specific embodiment for distillation is given in US 3,649,467, where a liquid mixture is passed through a channel with the wall being permeable to vapor. This vapor diffuses via a permeable wall and condenses again on the other side or on the next permeable wall, separated from the first wall by a vapor diffusion area, thereby transferring low-boiling components from one side of the wall to the other or to the next permeable wall. Further, WO 99/64,147 describes a microcomponent assembly for efficient contacting of fluids. It is built up of flat compartments. In between compartments porous contactors are placed through which mass transfer of vapours takes place from one to the other compartment. The resulting process may be adsorption, desorption, or distillation. Heat exchangers and coolers can easily be added to each compartment to accelerate these processes or generate cooled and/or heated streams for external use, resulting in compact equipment. In this equipment heat of condensation is taken up by a coolant and led outside the equipment or used elsewhere in the equipment. That way mass transfer takes place into one direction, i.e. from the warm to the cold side. WO 95/35,153 describes an absorber or desorber using membrane contactor technology. Both are one way processes, where the compounds diffuse through the membrane walls, from the gas phase to the liquid phase in the absorbing mode and from the liquid to the gas phase in the desorbing mode. In EP 457,981 a multistage pervaporation process is described, in which each stage includes heating, cooling and one way mass transfer from the warmer to the colder side through selective membranes.

On the other hand, in the patent specification US 3,562,116, a distillation process is described in which a vapor is passed through thin films of liquid and only condensed at the end of the column. Here, however, it is necessary that the vapor flows via the liquid by condensation on the hotter side of the liquid film and evaporation on the colder side, so that the liquid can only be present in thin films, which affects the flow rate in the column.

Also, membrane technology is outstandingly suitable to crack azeotropes, without addition of chemicals. This can be done by enriching a mixture having a composition close to the azeotrope outside the column and recycling it or separating it in a next column (US 4,774,365). Also described is the cracking of the azeotrope with membrane technology in the column (US 5,614,065). Pervaporation or vapor permeation, however, have not made a breakthrough yet.

The object of the invention is to provide a distillation process which inter alia:

- requires less energy than known processes;
- can be carried out in a device with less volume;
- gives more degrees of freedom in the construction of a distillation unit.

The invention consists in fluid streams of different concentrations being brought into mutual proximity using permeable membrane contactors. These membrane contactors guide the liquid stream. The membrane contactor holds the liquid and allows molecules to pass only as vapor. Optionally, but not necessarily, the membrane wall can be selective in respect of the components of the liquid stream.

The present invention accordingly provides a method as claimed in claim 1, for fractionating a liquid mixture comprising a low-boiling and a high-boiling component, wherein the liquid mixture is passed through a liquid channel of a first membrane contactor, with the walls of the liquid channel being permeable to vapor; wherein vapor is passed along the liquid channel; wherein mass exchange takes place via the walls of the liquid channel between the liquid mixture and a vapor outside the liquid channel; so that a first vapor enriched in low-boiling component is formed and the liquid mixture is enriched in high-boiling component. In the invention, a membrane contactor is used. The membrane contactor forms (at least) a liquid channel which the liquid to be fractionated can flow through. Vapor diffuses from the liquid channel via the permeable wall. Between the vapor outside the liquid channel and the liquid in the liquid channel, mass exchange arises. This is a dynamic process overall resulting in a vapor having a higher concentration of the most volatile (low-boiling) component than the initial liquid mixture. The remaining liquid is thereby relatively enriched in high-boiling component.

In this embodiment, the membrane forming the permeable wall of the liquid channel is non-selective. The membrane passes the high-boiling and the low-boiling component to the same extent. However, the use of selective membranes is not excluded by the invention. In principle, conventional types of membrane are suitable. The membrane may or may not be wetted by liquid.

Preferably, the method according to the invention is carried out with at least two membrane contactors. In this method, the first vapor enriched in the low-boiling component is passed along a second membrane contactor which comprises a liquid channel whose walls are permeable to vapor;
a second liquid mixture comprising the low-boiling and the high-boiling component is passed through the liquid channel of the second membrane contactor;
wherein mass exchange takes place via the walls of the liquid channel between the second liquid mixture and a vapor outside the liquid channel;
so that a second vapor enriched in low-boiling component compared with the first vapor is formed and the second liquid mixture is enriched in high-boiling component.

The liquid channels ofthe first and second membrane contactors can be coupled, and the second liquid mixture enriched in high-boiling component leaving the second membrane contactor is passed through the first membrane contactor and is further enriched in high-boiling component.

A number of membrane contactors whose liquid channels have been coupled can be combined, for instance in a container in which the fractionation can be performed. This embodiment concerns a method for fractionating a liquid stream comprising a low-boiling and a high-boiling component, wherein the liquid stream is passed through at least two membrane contactors, wherein the liquid stream flows successively through the membrane contactors and at each membrane contactor is enriched in high-boiling component, and a vapor stream is passed along the membrane contactors in a direction opposite to or transverse to the direction of the liquid stream, which vapor stream is enriched with low-boiling component from the liquid stream.

The membrane contactors may be combined in a container, but the invention can also consist of an assembly of "loose" membrane contactors which are coupled.

A vapor stream rich in low-boiling component and a liquid stream rich in high-boiling component thus egress from the assembly of membrane contactors. Carrying out the method in such an assembly has as an advantage that there are many contact surfaces and that a high separation efficiency can be achieved. In fact, such an embodiment is comparable to a classic distillation in a plate column. An important difference is that the liquid and vapor phase are kept physically separate by a membrane contactor.

The egressive vapor stream is condensed and recovered as product. Preferably, a part of the condensed vapor stream is recycled as liquid stream into the last membrane contactor counter to the direction ofthe vapor stream. The egressive liquid stream is recovered as product. A part of the liquid stream is revaporized and recycled as vapor stream to the last membrane contactor transverse to or counter to the direction of the liquid stream.

The feed, which contains the mixture to be fractionated, is preferably introduced between the membrane contactor at the "top" and the membrane contactor at the "bottom" of the container. The bottom of the container is here the membrane contactor where a liquid stream egresses having the comparatively lower concentration of low-boiling component. The top of the container is formed by the contactor where the vapor stream exits having the comparatively higher concentration of low-boiling component, which is subsequently condensed, as described above. Preferably, the feed is supplied adjacent a membrane contactor where the liquid stream has a same composition as the feed.

The present invention also provides a device as claimed in claim 12 for fractionating a liquid mixture comprising a low-boiling and a high-boiling component, which device comprises:

a container provided at one end with a discharge for vapor stream enriched in low-boiling component (distillate) and a supply for liquid stream, and at the other end with a supply for vapor stream and a discharge for liquid stream enriched in high-boiling component (residue),
which container is further provided with a supply for a liquid mixture to be fractionated (feed),
wherein the container includes at least two membrane contactors which comprise a liquid channel for transport of the liquid stream, the liquid channel of a membrane contactor being connected with the liquid channel of an adjacent membrane contactor, such that the liquid stream can be transported via the membrane contactors from one end of the container to the other end,
wherein the walls of the membrane contactor are permeable to vapor and wherein the container comprises a vapor channel for transport of the vapor stream.

The vapor channel for transport of the vapor stream is formed such that a vapor channel along a membrane contactor is connected with a vapor channel along an adjacent membrane contactor, such that the vapor stream can be transported along the membrane contactors from one end of the container to the other end, specifically in a direction opposite or transverse to the liquid stream.

The container may further be provided with a condenser connected with the discharge for distillate, which condenser is provided with a discharge for condensed distillate, which is connected with the supply for liquid stream. Also, a revaporizer may be present, which is connected with the discharge for residue and which is provided with a discharge which is connected with the supply for vapor stream. An advantage of the present method is that the condenser and vaporizer can be placed outside the physical envelope of the container. The input of relatively warm vapor and relatively cold liquid provides for a temperature gradient within the container. This provides as an additional advantage that the flow rates of the liquid and the vapor by settings at pressure difference can be controlled independently of each other and, if necessary, be adjusted to obtain ideal conditions for mass exchange.

The membrane contactor forms (at least) a liquid channel. This can be obtained by using as membrane contactor two or more parallel flat membranes. Another possibility is the use of hollow-fiber membranes or capillary membranes. By combining a number of fibers in parallel, a segment of hollow fibers is obtained. This can be used as a whole as a membrane contactor. Through a segment flows a liquid stream with roughly the same composition in each hollow fiber. A number of segments of hollow fibers can be combined to form a hollow-fiber module. Through the whole module flows a liquid having roughly the same composition. The container is formed by a combination of two or more segments or modules.

In addition to a container, a suitable device according to the invention is an assembly ofa number of membrane contactors, in particular modules. These modules do not need to be provided in a fixed housing. In this way, additional freedoms are created for the structure of mass flows and heat exchange.

In a specific embodiment, the direction of flow of the liquid stream through a membrane contactor is crosswise with respect to the liquid stream through an adjacent membrane contactor.

Possible designs of walls of the liquid channels are: with porous membranes having thereon a thin dense polymer or ceramic layer which is (slightly) selective, through which the components permeate as vapor; a porous membrane which holds the liquid mixture in that the membranes are not wetted, while the pores are filled with vapor; and a porous wall which allows the liquid mixture to pass, such that the liquid sits as a thin film on the membrane contactor, the pores are filled with liquid.

It is preferred to construct the container such that the vapor stream at the liquid channel is countercurrent to the liquid stream. This can be achieved in that between the membrane contactors, plates are arranged which guide the vapor stream at the membrane contactor along the membrane contactor countercurrently to the liquid stream.

In one embodiment, the plates extend alternately from one or the other wall of the container, thereby leaving a passage clear for vapor stream and liquid stream. In another embodiment, the plates are at least partly perforated and extend throughout the width of the container. Also a combination of these embodiments is possible, with the plates being partly perforated for obtaining a passage for vapor stream and liquid stream.

An advantage of the invention is that the membrane contactors do not necessarily need to be placed onto each other to obtain a column as is the case in classic distillation. In classic distillation, to obtain a proper irrigation, the irrigation plates must be placed exactly horizontally and the column itself exactly vertically. The membrane contactors can be placed at any angle. Additionally, there is a free choice of the direction of flow of vapor and liquid stream.

The distance between membrane contactors is as small as possible and is determined by the physical dimensions of spacer materials, the membranes and the maximum permissible vapor pressure drop across the segments.

The invention will presently be elucidated with reference to the drawing, wherein:

- Fig. 1 represents a fractionation across two membrane contactors;
- Fig. 2a represents the top plan view of a container with several membrane contactors;
- Fig. 2b represents the side elevation of a container with several membrane contactors;
- Figs. 3a and 3b represent, respectively, a side and front view ofa possible container construction with hollow fibers with partial countercurrent and very low vapor pressure drop;
- Figs. 4a and 4b represent, respectively, a side and front view of a possible container construction with hollow fibers with complete countercurrent and reasonable vapor pressure drop;
- Figs. 5a and 5b represent, respectively, a side and front view of a possible container construction with hollow fibers with complete countercurrent and high vapor pressure drop;
- Figs. 6a and 6b represent, respectively, a side and front view of a possible container construction with hollow fibers with partial countercurrent and high vapor pressure drop;
- Figs. 7a and 7b represent, respectively, a side and front view of a possible container construction with perfect countercurrent and reasonable vapor pressure drop, designed with membrane modules;

- Figs. 8a and 8b represent, respectively, a side and front view of a possible container construction with flat membranes with partial countercurrent and very high pressure drop;
- Figs. 9a and 9b represent, respectively, a side and front view of a possible container construction with flat membranes with partial countercurrent and reasonable pressure drop.

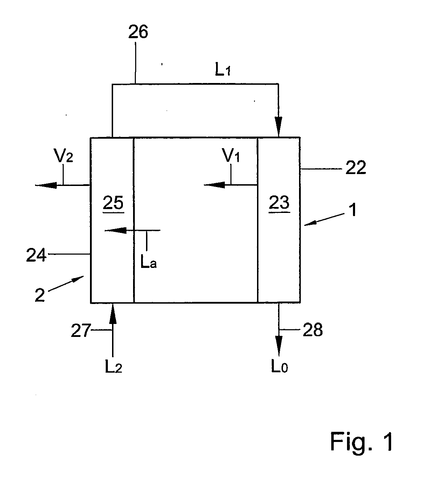

In Fig. 1, the method according to the invention is represented for two membrane contactors 1 and 2. Liquid stream $L_2$, which contains a low-boiling and high-boiling component, is supplied via line 27 to membrane contactor 2 which consists of wall 24 which surrounds a liquid channel 25. The liquid channel is, for instance, a hollow fiber. A liquid stream $L_1$ enriched in high-boiling component, compared with $L_2$, leaves membrane contactor 2 via line 26 and is subsequently passed to membrane contactor 1.

Membrane contactor 1 consists of a wall 22, which surrounds a liquid channel 23. A liquid stream $L_0$ enriched in high-boiling component, compared with liquid stream $L_1$, leaves the membrane contactor 1 via line 28. Via the wall 22 of membrane contactor 1 a vapor stream $V_1$ diffuses. This vapor stream is enriched in low-boiling component compared with liquid stream $L_1$. Vapor stream $V_1$ flows in the direction of membrane contactor 2. From vapor stream $V_1$, a liquid stream $L_a$ condenses in liquid stream $L_2$. $L_a$, compared with $V_1$, is enriched in high-boiling component. From membrane contactor 2, via wall 24, a vapor stream $V_2$ diffuses. This vapor stream $V_2$, compared with vapor stream $V_1$, is enriched in low-boiling component.

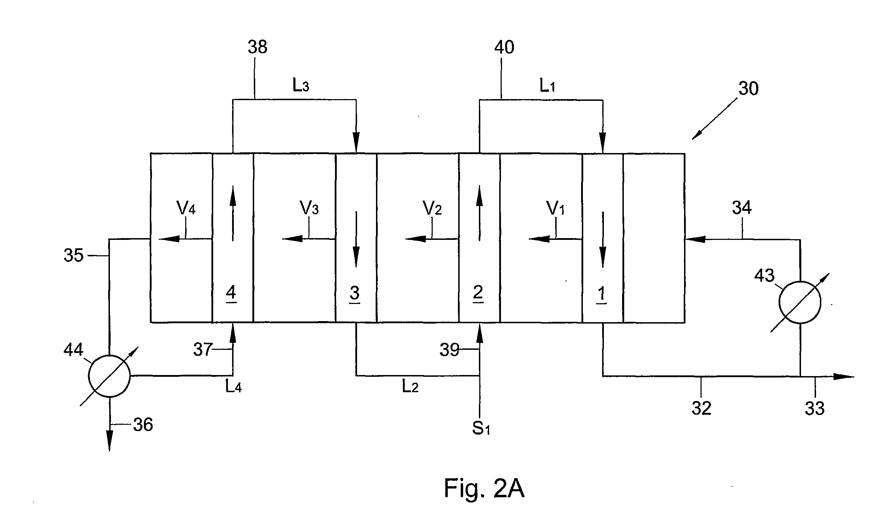

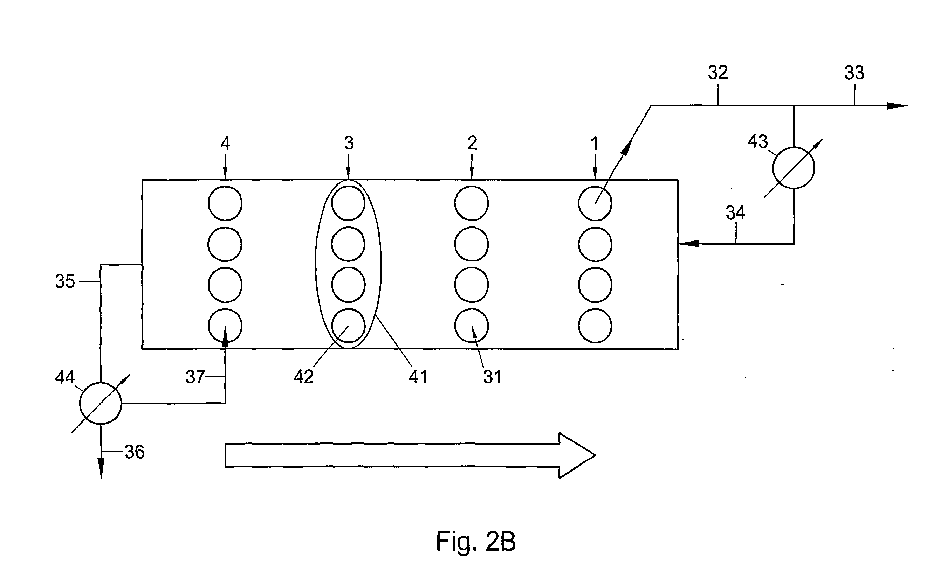

Figs. 2a and 2b represent a container which includes several membrane contactors. Fig. 2a shows a top plan view, while Fig. 2b shows a side elevation. Fig. 2a shows a container 30 in which, in illustration, four membrane contactors 1, 2, 3 and 4 are included. The membrane contactors can consist of hollow fibers, but may also be formed by flat membranes.

In Fig. 2a, via 31, feed is supplied to the container adjacent membrane contactor 2. From the container exits a liquid stream 32 which is separated into a bottom stream 33 (bottom product or residue) and a recycle stream 34. Via revaporizer 43, the recycle stream is heated before it is supplied to the container.

On the other side of the container exits a vapor stream 35. This is supplied to a condenser 44 whereafter a distillate stream 36 (top product) is obtained. A part of the distillate stream 37 is recycled to the container adjacent membrane contactor 4. This liquid stream $L_4$ flows through membrane contactor 4, where it is enriched in high-boiling component. An enriched liquid stream $L_3$ is passed via line 38 to membrane contactor 3, from which egresses a liquid stream $L_2$ which via line 39 is combined with the feed 31 and is supplied to membrane contactor 2, from which egresses a liquid stream $L_1$ which is passed via line 40 to membrane contactor 1, from which, finally, egresses liquid stream 32. From the above, it follows that the liquid stream, from top to bottom, is increasingly further enriched in high-boiling component.

In addition to the liquid stream, also a vapor stream passes through the container. At each membrane contactor, this stream is further enriched in low-boiling component ($V_1$, $V_2$, $V_3$, $V_4$, respectively). Finally, vapor stream 35 is obtained.

In Fig. 2b, in side view, a comparable container 30 to that in Fig. 2a is represented. A membrane contactor consists of a segment 41 of hollow fibers 42. In total, four membrane contactors (1, 2, 3, 4) are represented. Further, in these figures, the streams into and out ofthe container are represented, with the same reference numerals as in Fig. 2a. Thus, 31 is the feed, 32 is the bottom product, 34 is the recycle stream from the revaporizer 43, 35 is the vapor stream exiting from the container, 37 is a part of the condensed vapor stream which is recycled to the container after being condensed in condenser 44. Top product 36 and bottom product 33 are also represented. With the large arrow, the overall liquid stream through the fibers is represented.

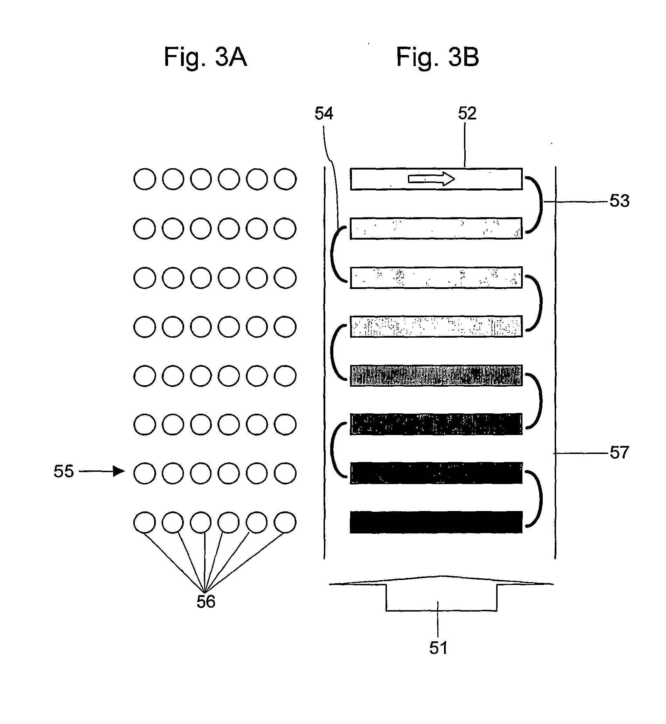

In Figs. 3 to 9, possible constructions ofthe container and the membrane contactors present therein are represented. All figures give both a front and a side view (a and b). In Figs. 3a and 3b, a number of segments 56 of hollow-fiber membranes 55 are represented, which are placed in container 57. Liquid stream 52 enters the upper segment and flows via the respective membrane segments through the container. The hollow-fiber membranes of each segment are coupled to the next segment via couplings 53, 54. A vapor stream 51 flows from the bottom segment through the container, overall countercurrently to the liquid, but locally, adjacent the hollow-fiber membranes, in cross-flow.

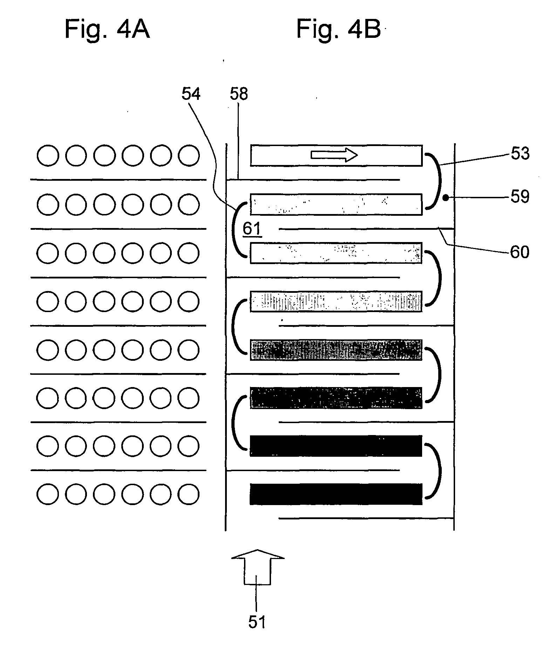

To change the contact between liquid stream and vapor stream and to adjust the pressure drop, different column constructions are possible, as represented in Figs. 4a/b, 5a/b and 6a/b. In Figs. 4a and 4b, alternately on one and the other wall of the container, plates 58, 60 are arranged. These plates leave spaces 59, 61 clear for flow-through of the vapor and the couplings 53, 54 between the hollow-fiber membranes.

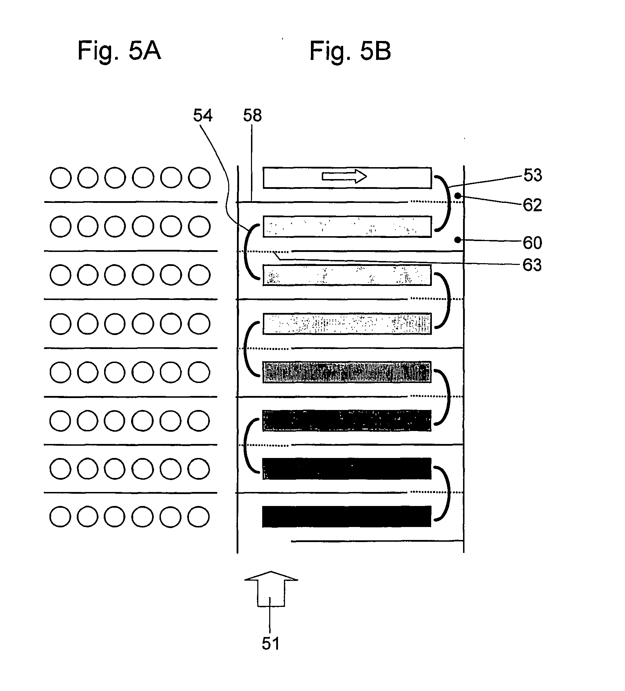

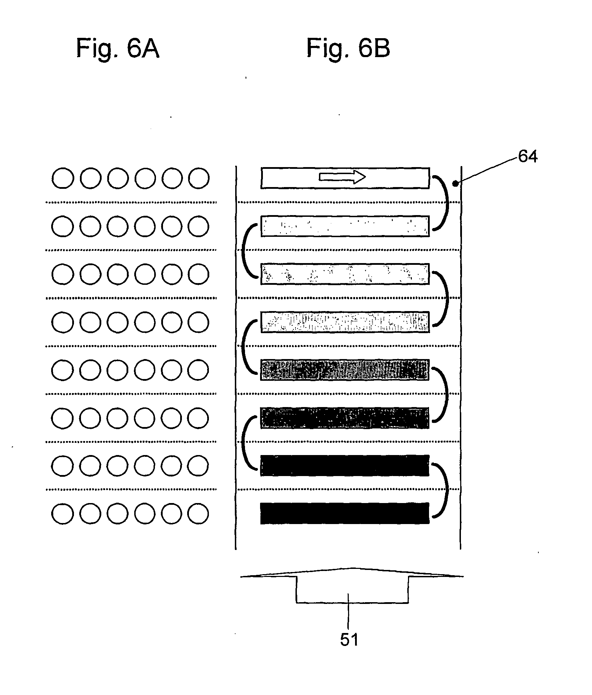

In Figs. 5a and 5b, the plates 58, 60 do not leave any spaces clear, but are perforated 62, 63 adjacent the couplings 53, 54 between the hollow-fiber membranes. In Figs. 6a and 6b, the plates 64 extend throughout the width and are perforated throughout the width.

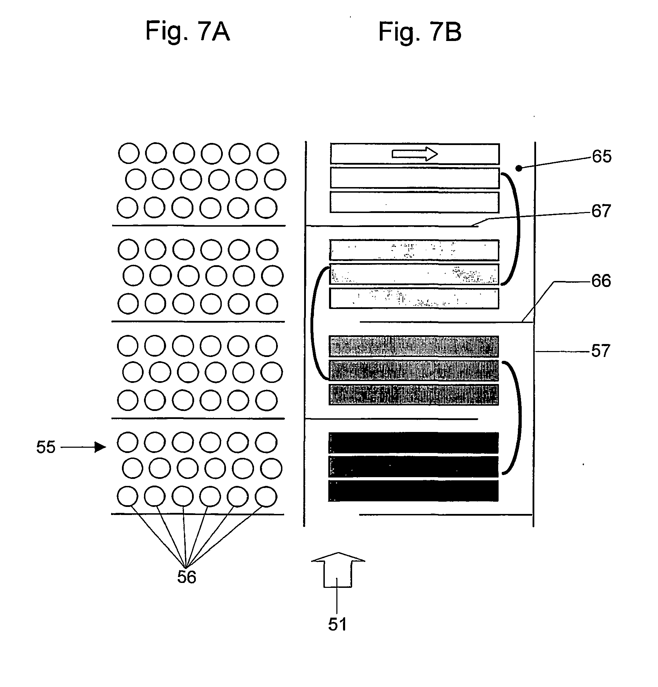

Figs. 7a and 7b show an example of a container in which the membrane contactors are in the form of hollow fiber modules 65. Through a module, which consists of different segments 56 of hollow fibers 55, a liquid stream of roughly the same composition flows through each of the hollow fibers. Between the modules, alternately on one and the other wall of the container 57, plates 66, 67 may be arranged, which provide for guidance of the vapor stream.

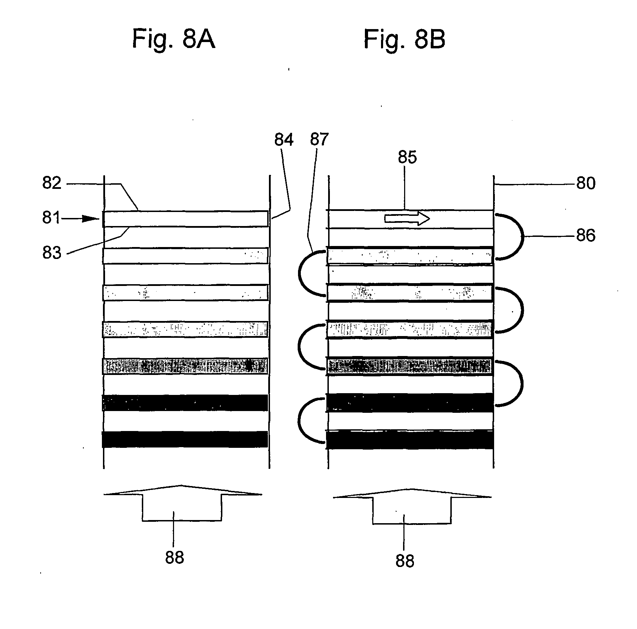

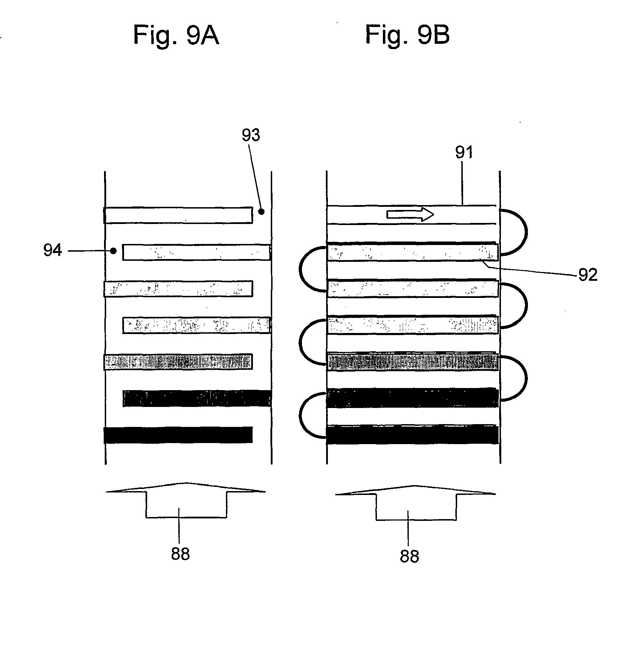

Figs. 8 and 9 represent two examples of containers in which the membrane contactors consist of flat membranes. In Figs. 8a and 8b, a container 80 is shown. In the container, membrane contactors 81 are arranged which consist of a flat membrane 82 and a flat membrane 83 which form a liquid channel 84. Through the liquid channel 84 between the two flat membranes 82 and 83 flows a liquid stream 85. Different thus formed membrane contactors are coupled via lines 86 and 87. A vapor stream 88 passes countercurrently to the overall liquid stream through the container and along the membranes.

In Figs. 9a an 9b, the membrane contactors 91, 92 are so arranged that, alternately on one and the other side, they leave spaces 93, 94 clear, through which the gas stream adjacent the membrane contactor flows crosscurrently to the liquid stream.

In the table below, core values for, respectively, plate column, structured packings and membrane container distillation.

| | Plate column distillation | distillation with structured packing | potency of membrane container |
|---|---|---|---|
| k [m/s] | 1.5 $10^{-1}$ | (2-4) x $10^{-2}$ | $10^{-3}$ - $10^{-4}$ |
| a [$m^2/m^3$] | 30-100 | 50-500 | 500-1300 |
| HTU/HETP [cm] | 40-60 | 30-50 | 5-30 |
| Column contents [Hfl/$m^2$] | - | 20-40 | >20-40 |
| Pressure drop [mbar/plate] | 2-5 | 0.1-0.5 | 0.2 |

The parameters mentioned have the meaning known in the art, viz.:
k: mass transfer coefficient
a: specific surface area
HTU: height of a transfer unit
HETP: height equivalent of a theoretical plate

## Examples

### Example 1

Calculation of HETP for the fractionation mixture Benzene/Toluene - negligible membrane resistance -

On the basis of rules of thumb applying to distillation, known physical properties, known mass transfer coefficients of membrane contactors in comparable systems and suitable Sherwood equations, an estimate was made of the height equivalent of a theoretical plate (HETP) for the model mixture of toluene/benzene in an atmospheric column. In this mixture, benzene is more volatile than toluene, so that evaporating liquid is enriched in benzene, while condensing vapor is enriched in toluene. The mixture does not form any azeotrope. The following assumptions were made:

Average physical properties, density (p) and viscosity (η) of the liquid (L) and the gas (G), respectively:

$\rho_L$ = 800 kg/$m^3$
$\rho_G$ = 2.8 kg/$m^3$
$\eta_L$ = 2.8 $10^{-4}$ Ns/$m^2$
$\eta_G$ = $10^{-5}$ Ns/$m^2$

Estimated diffusion coefficients (D):

Liquid: $D_L = 5\ 10^{-9}\ m^2/s$
Vapor: $D_G = 10^{-5}\ m^2/s$

Partition coefficient (m)

$$m = K\frac{\rho_G}{\rho_L} = 1\frac{2.8}{800} = 0.0035$$

Hollow fiber dimensions

| | |
|---|---|
| external diameter: | $d_{ext}$ = 1 mm, |
| wall thickness: | $\delta$ = 0 mm |
| length: | L = 200 mm |
| Superficial gas velocity: | $v_G$ = 0.5 m/s |

Calculation of overall gas transfer coefficient $k_{OG}$:

$$\frac{1}{k_{OG}} = \frac{1}{k_G} + \frac{m}{k_L} = 23.8 + 78 = 102 \text{ s/m}$$

$k_{OG} = 10^{-2}$ m/s

$$HTU_{OG} = \frac{v_G}{k_{OG}a} = \frac{0.5}{10^{-2}10^{3}} = 0.05 \text{ m} = 5 \text{ cm}$$

The HETP is thus about 5 cm.
Per HETP the vapor pressure drop is 0.2 mbar and the liquid pressure drop is 35 mbar.

**Example 2**

Calculation of HETP for the fractionation mixture Benzene/Toluene

- including membrane resistance of membrane with top layer -

Assumptions as in Example 1. In addition, there is a top layer on a porous support layer having the following properties:

| | |
|---|---|
| Membrane wall thickness: | 100 μm |
| Top layer thickness gel: | 100 nm |
| Diffusion coefficient in the support layer: | $10^{-5}$ m/s |
| Diffusion coefficient in the gel layer: | $10^{-9}$ m/s |

Purpose of the gel layer is to prevent penetration of liquid into the porous portion of the membrane without impeding the mass transfer, hence without selectivity.

Performing the same calculations, with added thereto a resistance in series model with the above data results in an HETP of 10 cm.

The chief advantages of this method over classic distillation are:

- Saving of energy in that in the contact zones a much larger contact surface can be installed per volume, so that the fractionation is possible at a lower temperature. Use of energy coming from a lower energy class.
- Saving of volume in that in the contact zones a much larger contact surface can be installed per volume, so that a smaller device accomplishes the same separation.

- Vapor and liquid can also be passed through the contact zones in horizontal countercurrent.
- The contact zones can be constructed modularly.
- Through modular construction and low overall height, the separation device is easy to expand and easy to maintain.
- Through modular construction and low overall height, energy saving through the use of heat pumps (between the rectification and strip section) is easy to realize.
- No preferred flow of liquid. Hence, no liquid distributors and redistributors are needed.
- The permissible vapor velocity is not limited due to flooding of downwardly flowing liquid.
- No entrainment of small drops by the vapor. Hence, no mist collectors are needed.
- Optionally, increased selectivity by the use of specific membranes.
- Pressure of liquid can be set independently of pressure of vapor.

The following claims define the invention. The presence of reference signs in parentheses in these claims should not be construed as limiting the claims in any sense.

## Claims

**1.** A method for fractionating a liquid mixture comprising a low-boiling and a high-boiling component, wherein
the liquid mixture (L1) is passed through a liquid channel (23) of a first membrane contactor (1), with the walls (22) of the liquid channel being permeable to vapor (V1);
wherein vapor is passed along the liquid channel through a vapor channel;
wherein mass exchange takes place via the walls of the liquid channel between the liquid mixture and a vapor outside the liquid channel, whereby the low-boiling component is transferred from the liquid to the vapor channel and the high-boiling component is transferred from the vapor to the liquid channel ;
so that a first vapor is enriched in low-boiling component and the liquid mixture is enriched in high-boiling component.

**2.** A method according to claim 1, wherein
the first vapor (V1) enriched in the low-boiling component is passed along a second membrane contactor (2) which comprises a liquid channel (25) whose walls (24) are permeable to vapor;
a second liquid mixture (L2) comprising the low-boiling and the high-boiling component is passed through the liquid channel of the second membrane contactor;
wherein mass exchange takes place via the walls of the liquid channel between the second liquid mixture and a vapor outside the liquid channel;
so that a second vapor (V2) enriched in low-boiling component compared with the first vapor (V1) is formed and the second liquid mixture (25) is enriched in high-boiling component.

**3.** A method for fractionating a liquid mixture according to claim 1 or 2,
wherein said vapor channel is formed such that a vapor channel along the first membrane contactor is connected with a vapor channel along an adjacent membrane contactor, such that the vapor stream can be transported along the membrane contactors.

**4.** A method according to claim 2 or 3, wherein the second liquid mixture (L2) enriched in high-boiling component is passed through the first membrane contactor (1) and is further enriched in the high-boiling component.

**5.** A method according to any one of the preceding claims, for fractionating a liquid stream comprising a low-boiling and a high-boiling component, wherein the liquid stream is passed through at least two membrane contactors (1, 2, etc.), wherein the liquid stream successively flows through the membrane contactors and at each membrane contactor is enriched in high-boiling component, and
a vapor stream is passed along the membrane contactors in a direction opposite to the direction of the liquid stream, which vapor stream is enriched with low-boiling component from the liquid stream.

**6.** A method according to claim 5, wherein the vapor stream which has passed all membrane contactors is condensed and is partly recycled as liquid stream to the last membrane contactor counter to the direction of the vapor stream.

**7.** A method according to claim 5 or 6, wherein the liquid stream which has flowed through all membrane contactors is partly revaporized and is recycled as vapor stream to the last membrane contactor counter to the direction of the liquid stream.

**8.** A method according to claim 5, 6 or 7, wherein a feed (31) which comprises a liquid mixture to be fractionated is supplied to one of the membrane contactors.

**9.** A method according to claim 8, wherein the feed is supplied adjacent a membrane contactor where the liquid stream has a same composition as the feed.

**10.** A method according to any one of the preceding claims, wherein the vapor stream adjacent the liquid channel flows along the liquid channel countercurrently to the liquid stream.

**11.** A method according to any one of the preceding claims, wherein the direction of flow of the liquid stream through a membrane contactor is crosswise with respect to the liquid stream through an adjacent membrane contactor.

**12.** A device for carrying out the method according to any one of the preceding claims, which device comprises:

a container (30) provided at one end with a discharge for vapor stream enriched in low-boiling component (distillate)(35) and a supply for liquid stream (37), and at the other end with a supply for vapor stream (34) and a discharge for liquid stream enriched in high-boiling component (residue) (32),
which container is further provided with a supply for a liquid mixture to be fractionated (feed) (31),
wherein the container includes at least two membrane contactors (1, 2, etc.) which comprise a liquid channel for transport of the liquid stream (L1, L2, etc.), the liquid channel of a membrane contactor being connected (38, 39, etc.) with the liquid channel of an adjacent membrane contactor, such that the liquid stream can be transported via the membrane contactors from one end of the container to the other end,
wherein the membrane of the membrane contactors passes the high-boiling and low-boiling component to the same extent;
wherein the walls (22, 24) of the membrane contactors are permeable to vapor and
wherein the container comprises a vapor channel along the liquid channels of said membrane contactors for transport of the vapor stream (51).

**13.** A device according to claim 12, wherein the membrane contactors are formed by segments (41) of substantially parallel hollow membrane fibers (42).

**14.** A device according to claim 12, wherein the membrane contactors are formed by at least two flat membranes (82, 83).

**15.** A device according to any one of claims 12 to 14, wherein the container is further provided with a condenser (44) connected to the discharge for distillate (35), which condenser is provided with a discharge for condensed distillate which is connected to the supply for liquid stream (37).

**16.** A device according to any one of claims 12 to 15, wherein the container is further provided with a revaporizer (43), which is connected to the discharge for residue (32) and which is provided with a discharge which is connected to the supply for vapor stream (34).

**17.** A device according to any one of claims 12 to 16, wherein between the membrane contactors, plates (58) are arranged which guide the vapor stream, adjacent the membrane contactor, along the membrane contactor countercurrently to the liquid stream.

**18.** A device according to claim 17, wherein the plates extend alternately from one and the other wall of the container (66, 67), thereby leaving clear a passage for vapor stream and liquid stream.

**19.** A device according to claim 17, wherein the plates are at least partly perforated and extend throughout the width of the container.

**20.** A device according to claim 19, wherein the plates are partly perforated for obtaining a passage for vapor stream and liquid stream.

**Patentansprüche**

**1.** Verfahren zum Fraktionieren eines flüssigen Gemischs mit einer nierigsiedenden und einer hochsiedenden Komponente, wobei
das flüssige Gemisch (L1) durch einen Flüssigkeitskanal (23) eines ersten Membrankontaktors (1) geleitet wird, wobei die Wände (22) des Flüssigkeitskanals für Dampf (V1) durchlässig sind;
wobei Dampf entlang des Flüssigkeitskanals durch einen Dampfkanal geleitet wird;
wobei durch die Wände des Flüssigkeitskanals Massenaustausch zwischen dem flüssigen Gemisch und einer Dampfphase außerhalb des Flüssigkeitskanals stattfindet, wodurch die niedrigsiedende Komponente von der Flüssigkeit zu dem Dampfkanal und die hochsiedende Komponente aus der Dampfphase zu dem Flüssigkeitskanal übergeleitet wird;
so dass eine erste Dampfphase mit niedrigsiedender Komponente angereichert wird und das flüssige Gemisch mit hochsiedender Komponente angereichert wird.

**2.** Verfahren nach Anspruch 1, wobei
die mit niedrigsiedender Komponente angereicherte erste Dampfphase (V1) entlang eines zweiten Membrankontaktors (2) geleitet wird, der einen Flüssigkeitskanal (25) aufweist, dessen Wände (24) für Dampf durchlässig sind;
ein zweites flüssiges Gemisch (L2) mit der niedrigsiedenden und der hochsiedenden Komponente durch den Flüssigkeitskanal des zweiten Membrankontaktors geleitet wird;
wobei durch die Wände des Flüssigkeitskanals Massenaustausch zwischen dem zweiten flüssigen Gemisch und Dampf außerhalb des Flüssigkeitskanals stattfindet;
so dass eine zweite Dampfphase (V2), die verglichen mit der ersten Dampfphase (V1) an niedrigsiedender Komponente angereichert ist, gebildet wird und das zweite flüssige Gemisch (25) an hochsiedender Komponente angereichert wird.

**3.** Verfahren zum Fraktionieren eines flüssigen Gemischs nach Anspruch 1 oder 2, wobei der Dampfkanal so gebildet ist, dass ein Dampfkanal entlang des ersten Membrankontaktors mit einem Dampfkanal entlang eines benachbarten Membrankontaktors verbunden ist, so dass der Dampfstrom entlang der Membrankontaktoren transportiert werden kann.

**4.** Verfahren nach Anspruch 2 oder 3, wobei das zweite flüssige Gemisch (L2), das mit hochsiedender Komponente angereichert ist, durch den ersten Membrankontaktor (1) geleitet wird und weiter mit der hochsiedenden Komponente angereichert wird.

**5.** Verfahren nach einem der vorhergehenden Ansprüche, zum Fraktionieren eines Flüssigkeitsstroms mit einer niedrigsiedenden und einer hochsiedenden Komponente, wobei der Flüssigkeitsstrom durch wenigstens zwei Membrankontaktoren (1, 2, etc.) geleitet wird, der Flüssigkeitsstrom aufeinanderfolgend durch die Membrankontaktoren fließt und bei jedem Membrankontaktor mit hochsiedender Komponente angereichert wird, und
ein Dampfstrom entlang der Membrankontaktoren in entgegengesetzter Richtung zu der Richtung des Flüssigkeitsstroms geleitet wird, wobei der Dampfstrom mit niedrigsiedender Komponente aus dem Flüssigkeitsstrom angereichert wird.

**6.** Verfahren nach Anspruch 5, wobei der Dampfstrom, der alle Membrankontaktoren passiert hat, kondensiert wird und teilweise als Flüssigkeitsstrom zu dem letzten Membrankontaktor entgegen der Richtung des Dampfstroms zurückgeführt wird.

**7.** Verfahren nach Anspruch 5 oder 6, wobei der Flüssigkeitsstrom, der durch alle Membrankontaktoren geflossen ist, teilweise verdampft wird und als Dampfstrom zu dem letzten Membrankontaktor entgegengesetzt zu der Richtung des Flüssigkeitsstroms zurückgeführt wird.

**8.** Verfahren nach Anspruch 5, 6 oder 7, wobei eine Einspeisung (31), die ein zu fraktionierendes flüssiges Gemisch aufweist, einem der Membrankontaktoren zugeführt wird.

**9.** Verfahren nach Anspruch 8, wobei die Einspeisung angrenzend an einen Membrankontaktor zugeführt wird, wo der Flüssigkeitsstrom die gleiche Zusammensetzung wie die Einspeisung hat.

**10.** Verfahren nach einem der vorhergehenden Ansprüche, wobei der Dampfstrom benachbart dem Flüssigkeitskanal entlang des Flüssigkeitskanals entgegengesetzt gerichtet zu dem Flüssigkeitsstrom fließt.

**11.** Verfahren nach einem der vorhergehenden Ansprüche, wobei die Fließrichtung des Flüssigkeitsstroms durch einen Membrankontaktor quer in Bezug auf den Flüssigkeitsstrom durch einen benachbarten Membrankontaktor ist.

**12.** Vorrichtung zum Durchführen des Verfahrens nach einem der vorhergehenden Ansprüche, wobei die Vorrichtung aufweist:

Einen Behälter (30), der an einem Ende mit einem Auslass für einen mit niedrigsiedender Komponente (Destillat) (35) angereicherten Dampfstrom und eine Zufuhr für einen Flüssigkeitsstrom (37) versehen ist und am anderen Ende mit einer Zufuhr für einen Dampfstrom (34) und einem Auslass für einen mit hochsiedender Komponente (Rückstrand) (32) angereicherten Flüssigkeitsstrom versehen ist,
wobei der Behälter weiter mit einer Zufuhr für ein zu fraktionierendes flüssiges Gemisch (Einspeisung) (31) versehen ist,
wobei der Behälter wenigstens zwei Membrankontaktoren (1, 2, etc.) umfasst, die einen Flüssigkeitskanal zum Transport des Flüssigkeitsstroms (L1, L2, etc.) aufweisen, wobei der Flüssigkeitskanal eines Membrankontaktors verbunden ist (38, 39, etc.) mit dem Flüssigkeitskanal eines benachbarten Membrankontaktors, so dass der Flüssigkeitsstrom durch die Membrankontaktoren von einem Ende des Behälters zum anderen Ende transportiert werden kann,
wobei die Membran der Membrankontaktoren die hochsiedende und die niedrigsiedende Komponente in gleichem Umfang passieren lässt;
wobei die Wände (22, 24) der Membrankontaktoren durchlässig für Dampf sind und
wobei der Behälter einen Dampfkanal entlang der Flüssigkeitskanäle der Membrankontaktoren zum Transport des Dampfstroms (51) aufweist.

**13.** Vorrichtung nach Anspruch 12, wobei die Membrankontaktoren durch Segmente (41) aus im Wesentlichen parallelen hohlen Membranfasern (42) gebildet sind.

**14.** Vorrichtung nach Anspruch 12, wobei die Membrankontaktoren durch wenigstens zwei flache Membranen (82, 83) gebildet sind.

**15.** Vorrichtung nach einem der Ansprüche 12 bis 14, wobei der Behälter weiter einen mit dem Auslass für das Destillat (35) verbundenen Kondensator (44) aufweist, der mit einem Auslass für kondensiertes Destillat versehen ist, der mit der Zufuhr für Flüssigkeitsstrom (37) verbunden ist.

**16.** Vorrichtung nach einem der Ansprüche 12 bis 15, wobei der Behälter weiter mit einem Wiederverdampfer (43) versehen ist, der mit dem Auslass für Rückstand (32) verbunden ist und der mit einem Auslass versehen ist, der mit der Zufuhr für Dampfstrom (34) verbunden ist.

**17.** Vorrichtung nach einem der Ansprüche 12 bis 16, wobei zwischen den Membrankontaktoren Platten (58) angeordnet sind, die den Dampfstrom angrenzend an den Membrankontaktor entlang des Membrankontaktors entgegengesetzt zu dem Flüssigkeitsstrom leiten.

**18.** Vorrichtung nach Anspruch 17, wobei die Platten abwechselnd von einer und der anderen Wand des Behälters (66, 67) ausgehen, wodurch sie einen freien Durchgang für Dampfstrom und Flüssigkeitsstrom lassen.

**19.** Vorrichtung nach Anspruch 17, wobei die Platten wenigstens teilweise mit Löchern versehen sind und sich über die ganze Breite des Behälters erstrecken.

**20.** Vorrichtung nach Anspruch 19, wobei die Platten teilweise mit Löchern versehen sind, um einen Durchlass für Dampfstrom und Flüssigkeitsstrom zu erhalten.

## Revendications

**1.** Procédé pour fractionner un mélange liquide comportant un composant à bas point d'ébullition et un composant à haut point d'ébullition, dans le quel
le mélange liquide (L1) passe à travers un canal de liquide (23) d'un premier contacteur à membrane (1), les parois (22) du canal de liquide étant perméables à une vapeur (V1),
dans lequel de la vapeur passe le long du canal de liquide à travers un canal de vapeur,
dans lequel un échange de masse se produit par les parois du canal de liquide entre le mélange liquide et une vapeur à l'extérieur du canal de liquide, de sorte que le composant à bas point d'ébullition est transféré du canal de liquide au canal de vapeur et le composant à haut point d'ébullition est transféré du canal de vapeur au canal de liquide,
de telle sorte qu'une première vapeur est enrichie en composant à bas point d'ébullition et le mélange liquide est enrichi en composant à haut point d'ébullition.

**2.** Procédé selon la revendication 1, dans lequel
la première vapeur (V1) enrichie en composant à bas point d'ébullition passe le long d'un second contacteur à membrane (2) qui comporte un canal de liquide (25) dont des parois (24) sont perméables à la vapeur,
un second mélange liquide (L2) comportant le composant à bas point d'ébullition et le composant à haut point d'ébullition passe à travers le canal de liquide du second contacteur à membrane,
dans lequel un échange de masse se produit par les parois du canal de liquide entre le second mélange liquide et une vapeur à l'extérieur du canal de liquide,
de telle sorte qu'une seconde vapeur (V2) enrichie en composant à bas point d'ébullition par rapport à la première vapeur (V1) est formée et le second mélange liquide (25) est enrichi en composant à haut point d'ébullition.

**3.** Procédé pour fractionner un mélange liquide selon la revendication 1 ou 2, dans lequel ledit canal de vapeur est formé de telle sorte qu'un canal de vapeur le long du premier contacteur à membrane est relié à un canal de vapeur le long d'un contacteur à membrane adjacent, de telle sorte que le flux de vapeur peut être transporté le long des contacteurs à membrane.

**4.** Procédé selon la revendication 2 ou 3, dans lequel le second mélange liquide (L2) enrichi en composant à haut point d'ébullition passe à travers le premier contacteur à membrane (1) et est également enrichi en composant à haut point d'ébullition.

**5.** Procédé selon l'une quelconque des revendications précédentes, pour fractionner un flux de liquide comportant un composant à bas point d'ébullition et un composant à haut point d'ébullition, dans lequel le flux de liquide passe à travers au moins deux contacteurs à membrane (1, 2, etc.), dans lequel le flux de liquide s'écoule successivement à travers les contacteurs à membrane et au niveau de chaque contacteur à membrane est enrichi en composant à haut point d'ébullition, et le flux de vapeur passe le long des contacteurs à membrane dans une direction opposée à la direction du flux de liquide, lequel flux de vapeur est enrichi en composant à bas point d'ébullition provenant du flux de liquide.

**6.** Procédé selon la revendication 5, dans lequel le flux de vapeur qui est passé dans tous les contacteurs à membrane est condensé et est partiellement recyclé sous forme de flux de liquide jusqu'au dernier contacteur à membrane dans la direction contraire au flux de vapeur.

**7.** Procédé selon la revendication 5 ou 6, dans lequel le flux de liquide qui s'est écoulé à travers tous les contacteurs à membrane est partiellement revaporisé et est recyclé sous forme de flux de vapeur jusqu'au dernier contacteur à membrane dans la direction contraire au flux de liquide.

**8.** Procédé selon la revendication 5, 6 ou 7, dans lequel une alimentation (31) qui comporte un mélange liquide à fractionner est fournie à l'un des contacteurs à membrane.

**9.** Procédé selon la revendication 8, dans lequel l'alimentation est fournie adjacente à un contacteur à membrane où le flux de liquide a la même composition que l'alimentation.

**10.** Procédé selon l'une quelconque des revendications précédentes, dans lequel le flux de vapeur adjacent au canal de liquide s'écoule le long du canal de liquide à contre-courant du flux de liquide.

**11.** Procédé selon l'une quelconque des revendications précédentes, dans lequel la direction d'écoulement du flux de liquide à travers un contacteur à membrane est transversale par rapport au flux de liquide à travers un contacteur à membrane adjacent.

**12.** Dispositif pour mettre en oeuvre le procédé selon l'une quelconque des revendications précédentes, lequel dispositif comporte :

un récipient (30) agencé à une extrémité en ayant une évacuation de flux de vapeur enrichi en composant à bas point d'ébullition (distillat) (35) et une alimentation en flux de liquide (37), et à L'autre extrémité en ayant une alimentation en flux de vapeur (34) et une évacuation de flux de liquide enrichi en composant à haut point d'ébullition (résidu) (32),
lequel le récipient est également muni d'une alimentation en mélange liquide à fractionner (alimentation) (31),
dans lequel le récipient inclut au moins deux contacteurs à membrane (1, 2, etc.) qui comportent un canal de liquide destiné à un transport du flux de liquide (L1, L2, etc.), le canal de liquide d'un contacteur à membrane étant relié (38, 39, etc.) au canal de liquide d'un contacteur à membrane adjacent, de telle sorte que le flux de liquide peut être transporté par les contacteurs à membrane d'une extrémité du récipient jusqu'à l'autre extrémité,
dans lequel la membrane des contacteurs à membrane transfère les composants à haut point d'ébullition et à bas point d'ébullition dans une ampleur égale,
dans lequel les parois (22, 24) des contacteurs à membrane sont perméables à la vapeur et
dans lequel le récipient comporte un canal de vapeur le long des canaux de liquide desdits contacteurs à membrane pour un transport du flux de vapeur (51).

**13.** Dispositif selon la revendication 12, dans lequel les contacteurs à membrane sont formés par des segments (41) en fibres de membrane creuses sensiblement parallèles (42).

**14.** Dispositif selon la revendication 12, dans lequel les contacteurs à membrane sont formés par au moins deux membranes planes (82, 83).

**15.** Dispositif selon l'une quelconque des revendications 12 à 14, dans lequel le récipient est également muni d'un condenseur (44) relié à l'évacuation de distillat (35), lequel condenseur est muni d'une évacuation de distillat condensé qui est reliée à l'alimentation en flux de liquide (37).

**16.** Dispositif selon l'une quelconque des revendications 12 à 15, dans lequel le récipient est également muni d'un revaporisateur (43), qui est relié à l'évacuation de résidu (32) et qui est muni d'une évacuation qui est reliée à l'alimentation en flux de vapeur (34).

**17.** Dispositif selon l'une quelconque des revendications 12 à 16, dans lequel entre les contacteurs à membrane, sont agencées des plaques (58) qui guident le flux de vapeur, de manière adjacente au contacteur à membrane, le long du contacteur à membrane à contre-courant du flux de liquide.

**18.** Dispositif selon la revendication 17, dans lequel les plaques s'étendent alternativement à partir de l'une et l'autre parois du récipient (66, 67), en laissant ainsi un passage libre pour un flux de vapeur et un flux de liquide.

**19.** Dispositif selon la revendication 17, dans lequel les plaques sont au moins partiellement perforées et s'étendent à travers toute la largeur du récipient.

**20.** Dispositif selon la revendication 19, dans lequel les plaques sont partiellement perforées pour obtenir un passage pour un flux de vapeur et un flux de liquide.

26
L1
V2
V1
22
25
23
1
24
La
2
27
28
L2
L0

Fig. 1

30
34
43
33
32
$L_1$
40
$V_1$
1
2
$S_1$
39
$V_2$
$L_2$
3
$L_3$
38
$V_3$
4
37
$L_4$
$V_4$
35
44
36

Fig. 2A

33
32
43
34
1
2
3
4
31
41
42
37
36
35
44

Fig. 2B

Fig. 3A
Fig. 3B
54
52
53
57
55
56
51

Fig. 4A
Fig. 4B
54
58
53
59
61
60
51

Fig. 5A
Fig. 5B
54
58
53
62
60
63
51

Fig. 6A

Fig. 6B
64
51

Fig. 7A
Fig. 7B

65
67
66
57
55
56
51

Fig. 8A

Fig. 8B

84
87
85
82
80
81
86
83
88
88

Fig. 9A
Fig. 9B
93
94
91
92
88
88